# EUROPÄISCHE PATENTSCHRIFT

(11) **EP 0 562 494 B1**
(45) Veröffentlichungstag und Bekanntmachung des Hinweises auf die Patenterteilung: **21.06.1995**
(21) Anmeldenummer: 93104582.7
(22) Anmeldetag: 19.03.1993
(51) Int. Cl.: H04Q 7/32

(54) **Nach der DECT-Norm arbeitende Schnurlos-Telefonanlage**
Cordless telephone arrangement working according to the DECT-norm
Installation radio-téléphonique travaillant suivant la norme DECT

(30) Priorität: 25.03.1992 CH 936/92
(43) Veröffentlichungstag der Anmeldung: 29.09.1993
(73) Patentinhaber: ASCOM BUSINESS SYSTEMS AG, CH-4503 Solothurn (CH)
(72) Erfinder: Mosimann, Dieter, CH-4562 Biberist (CH); Vogt, Ernst, CH-4513 Langendorf (CH)
(74) Vertreter: Schwerdtel, Eberhard, Dr.

(56) Entgegenhaltungen:
- EP-A- 0 233 963
- IEEE COMMUNICATIONS MAGAZINE Bd. 29, Nr. 1, Januar 1991, PISCATAWAY, NJ US Seiten 105 - 110 BUCKINGHAM ET AL. 'A Business Cordless PABX Telephone Systemon 800 MHz based on the DECT technology'

## Beschreibung

Die Erfindung betrifft eine nach der DECT-Norm arbeitende Schnurlos-Telefonanlage entsprechend dem Oberbegriff des Anspruchs 1.

Mit dem Kürzel DECT (Digital European Cordless Telecommunications) werden Aktivitäten bezeichnet, die eine schnurlose digitale Telekommunikation betreffen. Hierbei dient der Begriff <schnurlos> zur Bezeichnung einer relativ begrenzten Gebietsgrösse und zur Abgrenzung von landesweiten Mobilfunk-Systemen. Im besonderen sind Schnurlos-Telefonanlagen räumlich auf Gebäude, Gebäudestockwerke oder Fabrikanlagen beschränkt und entsprechen damit in der Grösse und der Aufgabe konventionellen schnurgebundenen Hauszentralen-Anlagen.

Aus der Schrift EP-A-0 233 963 ist ein digitales Mobilfunksystem bekannt. Dieses umfasst eine Zentrale Funkvermittlungsstelle und mehrere mit dieser über Leitungen verbundene Feststationen. Von diesen erfolgt über Funk die Verbindung zu den mobilen Teilnehmergeräten. Das System arbeitet nach einem ausgeklügelten Zeitmultiplex und mit zwei Frequenzbändern. In der Funkvermittlungsstelle sind zwei Koppelfelder enthalten, die der Teilnehmervermittlung und dem Anschluss an das normale Telefonnetz gewährleisten.

Die Aufgabe der Erfindung besteht nun darin, eine nach der DECT-Norm arbeitende, möglichst preiswerte Anlage für Schnurlostelefonie anzugeben.

Der kennzeichnende Teil von Anspruch 1 gibt die Lösung dieser Aufgabe an. Die abhängigen Ansprüche definieren Ausgestaltungen der Erfindung.

Im folgenden wird die Erfindung anhand von drei Figuren beispielsweise näher beschrieben. Es zeigen:
- Fig. 1: - bekannter Aufbau einer schnurlos-Telefonanlage
- Fig. 2: - Rahmenmuster der DECT-Norm
- Fig. 3: - Blockschaltbild einer Schnurlos-Telefonanlage.

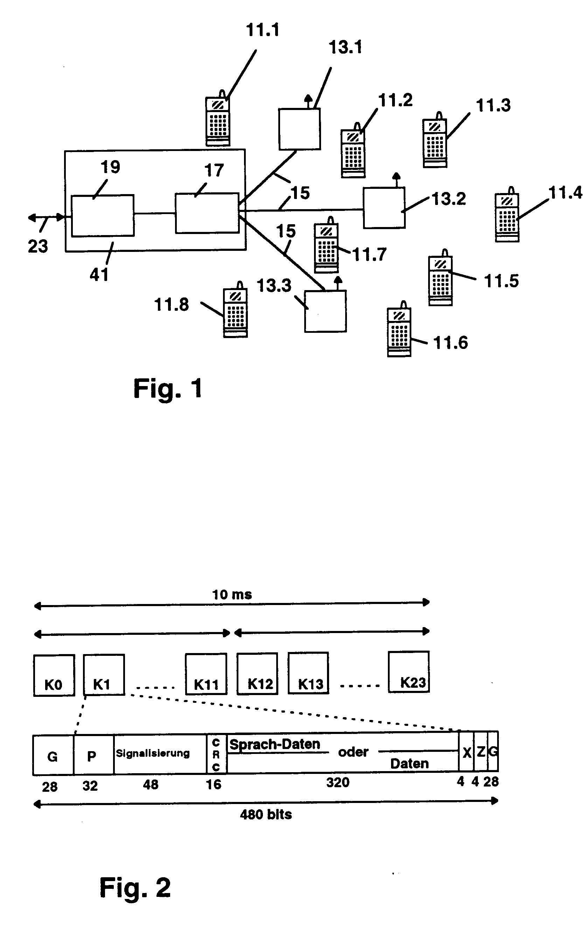

Fig. 1 zeigt den bekannten Aufbau einer der DECT-Norm entsprechenden digital arbeitenden schnurlos-Telefonanlage. Diese Anlage umfasst eine erste Mehrzahl von Portabelstationen 11.1 ... 11.n, wobei n zwischen 1 und mehreren hundert liegen kann. Die Portabelstationen 11 sind entweder einzelnen Personen im wesentlichen individuell zugeordnet und werden von diesen Personen im ganzen Gebiet der Anlage benützt, oder es handelt sich um unpersönliche, allgemein zugängliche Stationen.. Die Anlage umfasst eine zweite Mehrzahl von Fixstationen 13.1 ... 13.m, wobei m zwischen 1 und etwa 100 liegt. Die Fixstationen 13 sind über Duplex-Funkverbindungen mit den Portabelstationen 11 und über Leitungen 15.1 ... 15.m mit einer Funkvermittler-Einheit 17 verbunden, die wiederum leitungsgebunden mit einer Teilnehmer-Vermittlungs-Einheit 19 und weiter über eine Leitung 23 mit dem allgemeinen Netz verbunden ist. Die Einheiten 17 und 19 können natürlich auch räumlich eng miteinander verbunden bzw. zu einer Funk-und Teilnehmervermittlungs-Einheit 41 integriert sein.

Die Schnurlos-Telefonanlage funktioniert wie eine bekannte, drahtgebundene Telefonanlage, jedoch mit dem Unterschied, daß der Aufenthaltsort der Portabelstationen 11 sich ständig verändert und jede der Sprechverbindungen grundsätzlich über jede der Fixstationen 13 laufen kann.

Die DECT-Norm definiert entsprechend Fig. 2 ein digitales Rahmenmuster von 10 ms Dauer, das 24 Kanäle K0 ... K23 umfasst, die alle voneinander durch Sicherheitsabstände G (Guard Spaces) getrennt sind. Die innere Aufteilung der Kanäle, angegeben in Bit-Zahlen, geht aus Fig. 2 hervor. Die Dauer jedes Sicherheitsabstandes G beträgt 48 »s. Die Kanäle K0 ... K11 dienen für den Funkverkehr der Fixstationen 13 zu den Portabelstationen 11, die Kanäle K12 ... K23 für den Funkverkehr in der umgekehrten Richtung. Damit sind pro Portabelstation eine und pro Fixstation 13 zwölf Duplexverbindungen aufbaubar und unterhaltbar.

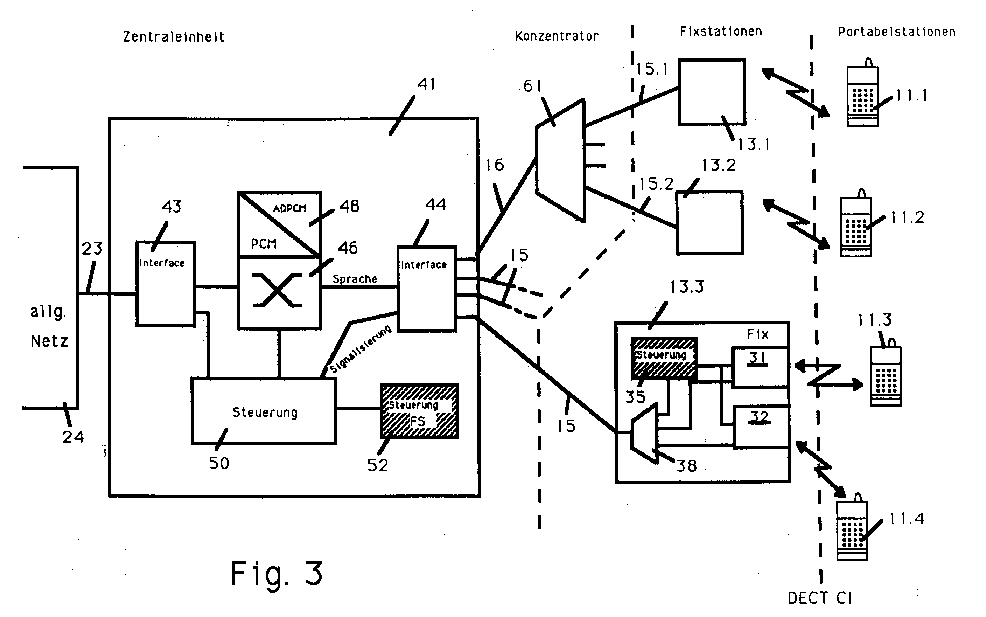

Fig. 3 zeigt ein verfeinertes Blockschaltbild einer Schnurlos-Telefonanlage, das mit Fig. 1 korrespondiert. Jede Fixstation 13.1, 13.2, 13.3 umfasst eine Sendeeinheit 31 und eine Empfangseinheit 32, über die der Funkverkehr mit den jeweiligen Portabelstationen 11 in den beiden Übertragungsrichtungen läuft. (Detalliert nur bei der Fixstation 13.3 gezeigt.) Jede Fixstation 13 weist weiter eine Steuerungseinheit 35 auf, die mit der jeweiligen Sende- 31 und Empfangseinheit 32 verbunden ist und diese steuert, beispielsweise bezüglich ihrer Sende- bzw. Empfangsfrequenz. Jede Fixstation 13 weist schliesslich noch eine Multiplexer/Demultiplexereinheit 38 auf, die die Einheiten 31, 32, 35 mit einer Verbindungsleitung 15 verbindet. Diese Leitung 15 ist eine Digitalleitung, auf der die in Fig. 2 gezeigte Rahmenstruktur der DECT-Norm vollständig verwendet wird. Auf der Leitung 15 werden somit ständig und zeitmultiplexiert zwölf Duplex- bzw. vierundzwanzig Einzelkanäle K0 ... K23 betrieben, ergänzt durch wenigstens einen Zustatzkanal ZK, der die im gesicherten Medium der Leitung 15 aufgabenfreien Sicherheitsabstände G benützt.

Die Funk- und Teilnehmervermittlungs-Einheit 41 umfasst zwei Interface-Einheiten 43, 44, eine Durchschalteeinheit 46, einen Norm-Wandler 48, eine Hauptsteuerung 50 und eine Nebensteuerung in Form einer Steuerungseinheit 52.

Die erste Interface-Einheit 43 bildet die Schnittstelle zur Leitung 23 und damit zum allgemeinen Telefonnetz 24, insbesondere einem PCM-Netz (PCM: Pulse Code Modulation). Im letzteren Fall ist die Leitung 23 beispielsweise eine ISDN-Leitung (ISDN: Integrated Services Digital Network). Die zweite Interface-Einheit 44 bildet die Schnittstelle zu den verschiedenen Verbindungsleitungen 15 und über diese zu den Fixstationen 13. Diese schnittstelle ist im wesentlichen ein Multiplexer/Demultiplexer, der die über die verschiedenen Leitungen 15 parallel und kanal-seriell ankommenden Datenpakete zerlegt und der Durchschalteeinheit 46 zuführt bzw. von dieser erhält und als Pakete den Kanälen K0 ... K23 der verschiedenen Leitungen 15 zuführt. Diese Vorgänge werden über die Hauptsteuerung 50 gesteuert und koordiniert.

Der Norm-Wandler 48 ist eng mit der Durchschalteeinheit 46 verbunden und hat die Aufgabe, für alle Daten, die vom allgemeinen Telefonnetz 24 kommen oder zu diesem abgesandt werden, die Übersetzung zwischen der Norm dieses Netzes 24 und der DECT-Norm vorzunehmen. Der relativ aufwendige Norm-Wandler 48 ist damit für die Schnurlos-Telefonanlage nur einmal vorhanden, die bis auf die erste Interface-Einheit 43 und eine noch zu beschreibende Ausnahme vollständig von der DECT-Norm beherrscht wird. Diese Eigenschaft zusammen mit dem beschriebenen Zusatzskanal ZK ergibt eine Anlage, deren Fixstationen 13 im Aufbau vergleichsweise einfach sind, was insgesamt eine preiswerte schnurlos-Telefonanlage ergibt.

Fig. 3 zeigt als Variante noch einen Konzentrator 61, der mittels einer Verbindungsleitung 16 einer zweiten Sorte zwischen die Zentraleinheit 41 und die Fixstationen 13.1 und 13.2 eingefügt ist. Dieser Konzentrator 61 dient als räumlich abgesetzte Einheit, die das Verkabelungsproblem vereinfacht. Der Konzentrator 61 arbeitet ebenfalls nach der DECT-Norm und bildet im wesentlichen einen Multiplexer/Demultiplexer.

Zur genannten Ausnahme von der DECT-Norm gehören vor allem die Nebensteuerung 52 der Zentraleinheit 41 und die Steuerungen 35 der Fixstationen 13. Die Nebensteuerung 52 erfüllt die Aufgabe, nicht mit der DECT-Norm zusammenhängende Signalisier- und steuerbefehle an die Steuerungen 35 der Fixstationen 13 abzusenden und in der Gegenrichtung Statussignale der Fixstationen 13 zu empfangen.

Die Schnurlos-Telefonanlage arbeitet wie folgt: Sobald der Wunsch nach einer Verbindung besteht, wird mittels der Wahltastatur einer jeweiligen Portabelstation 11 über die nächstliegende Fixstation 13 Kontakt mit der Hauptsteuerung 50 aufgenommen. Die Hauptsteuerung interpretiert den Verbindungswunsch, steuert die Durchschalteeinheit 46 und sorgt für die geeignete Durchschaltung in beiden Übertragungs-Richtungen. Dieses Prozedere ist durch die DECT-Norm bestimmt. Gleichzeitig sorgt die Nebensteuerung 52 für die Wahl einer geeigneten Sendefrequenz für die Funkverbindung zwischen der jeweiligen Fixstation 13 und der Portabelstation 11, ebenfalls für beide Richtungen.

Der für den Verkehr zwischen den Steuerungen 35 der verschiedenen Fixstationen 13 und der Nebensteuerung 52 der Funk- und Teilnehmervermittlungs-Einheit 41 dienende Zusatzkanal ZK bedient sich laufend der - wie gesagt - auf den Leitungen 15 aufgabenfreien Sicherheitsabstände G. Dies ist auf verschiedene Art möglich. So können alle Sicherheitsabstände eines Rahmens gemeinsam für eine einzige Signalisierung genutzt werden. Oder es kann jeder der vierundzwanzig Sicherheitsabstände G separat für eine spezielle Signalisierung verwendet werden. Schliesslich lassen sich auch gemischt mehrere der Sicherheitsabstände G für jeweils eine Signalisierung verwenden.

Auf der Verbindungsleitung 16 zwischen der Funk- und Teilnehmervermittlungs-Einheit 41 und dem Konzentrator 61 sind eine mit der Zahl der angeschlossenen Fixstationen (13.1, 13.2) multiplizierte Zahl von DECT-Kanälen erforderlich. Entsprechend ist die Zahl der notwendigen bzw. möglichen Zusatzkanäle (ZK) erhöht. Dies ist durch eine entsprechend erhöhte Bandbreite bzw. Bitrate der Leitung 16 problemlos realisierbar.

## Patentansprüche

1. Nach der DECT-Norm (DECT = Digital European Cordless Telecommunications) arbeitende Schnurlos-Telefonanlage mit Portabelstationen (11), mit Fixstationen (13) und mit einer an ein Telefonnetz (24) angeschlossenen zentralen Funk- und Teilnehmervermittlungs-Einheit (41), wobei die Portabelstationen (11) mit den Fixstationen (13) über Funk verbindbar und die Fixstationen (13) mit der Funk- und Teilnehmervermittlungs-Einheit (41) über je eine Verbindungsleitung (15) verbunden sind, und wobei auf den Übertragungsstrecken die Information zeitmultiplexiert übertragen wird,
dadurch gekennzeichnet,
- daß in der Funk- und Teilnehmervermittlungs-Einheit (41) und in jeder Fixstation (13) wenigstens je eine Steuerungseinheit (52, 35) vorgesehen ist, deren Funktionen nicht der DECT-Norm unterliegen, und
- daß den Steuerungseinheiten (52, 35) Mittel zugeordnet sind, die ausgebildet sind zum Übertragen von Information zwischen diesen Steuerungseinheiten (52, 35) über die Verbindungsleitungen (15), derart, daß hierbei im Zeitmultiplex die in der DECT-Norm vorgesehenen Sicherheitsabstände (G) zur Bildung wenigstens eines Zusatzkanals (ZK) ausgenützt werden.

2. Schnurlos-Telefonanlage nach Anspruch 1,
dadurch gekennzeichnet,
daß auf jeder Verbindungsleitung (15.1 - 15.n) ein einziger Zusatzkanal (ZK) besteht, der alle Sicherheitsabstände (G) der DECT-Rahmenstruktur gemeinsam ausnützt.

3. Schnurlos-Telefonanlage nach Anspruch 1,
dadurch gekennzeichnet,
daß auf jeder Verbindungsleitung (15.1 - 15.m) zwei oder mehr Zusatzkanale (ZK) bestehen, die die Sicherheitsabstände (G) der DECT-Rahmenstruktur in vorgegebener Art aufgeteilt, ausnützen.

4. Schnurlos-Telefonanlage nach Anspruch 1,
dadurch gekennzeichnet,
daß ein Konzentrator (61) vorgesehen ist, der zwischen der Funk- und Teilnehmervermittlungs-Einheit (41) und wenigstens zwei Fixstationen (13.1 - 13.m) eingefügt ist, und
daß auf seiner Verbindungsleitung (16) zur Funk- und Teilnehmervermittlungs-Einheit (41) wenigstens eine mit der Zahl angeschlossener Fixstationen (13.1 - 13.m) übereinstimmende Zahl von der Zusatzkanälen (ZK) besteht.

## Claims

1. A cordless telephone arrangement working according to DECT norm (DECT = Digital European Cordless Telecommunications) with portable stations (11), with fixed stations (13) and with a central mobile and subscriber exchange unit (41) connected to a telephone network (24), whereby the portable stations (11) are connectable to the fixed stations (13) via radio and the fixed stations (13) are connected to the mobile and subscriber exchange unit (41) via a connecting line (15) each and whereby the information is transmitted in a time-multiplexed manner on the transmission paths, characterized in
- that in the mobile and subscriber exchange unit (41) and in each fixed station (13) there is provided at least one control unit (52, 35) whose functions are not subject to the DECT norm, and
- that the control units (52, 35) are allocated means which are arranged for transmitting information between said control units (52, 35) via the connecting lines (15), this being so in such a way that in time multiplex the guard spaces (G) as provided in the DECT norm are used for forming at least one additional channel (ZK).

2. A cordless telephone arrangement as claimed in claim 1, characterized in that there is a single additional channel (ZK) on each connecting line (15.1 - 15.n) which jointly uses all guard spaces (G) of the DECT framing pattern.

3. A cordless telephone arrangement as claimed in claim 1, characterized in that there are two or more additional channels (ZK) on each connecting line (15.1 - 15.m) which use the guard spaces (G) of the DECT framing pattern divided in a predefined manner.

4. A cordless telephone arrangement as claimed in claim 1, characterized in that a concentrator (61) is provided which is inserted between the mobile and subscriber exchange unit (41) and at least two fixed stations (13.1 - 13.m) and that on its connecting line (1.6) to the mobile and subscriber exchange unit (41) there exist a number of additional channels (ZK) coinciding with the number of fixed stations (13.1 - 13.m) connected.

## Revendications

1. Installation radiotéléphonique travaillant selon la norme DECT (DECT = Digital European Cordless Telecommunications) comprenant des stations portables (11) , des stations fixes (13) et une unité CCM-central d'abonné (41) raccordée au réseau téléphonique, les stations portables (11) étant reliables avec les stations fixes (13) par radio et les stations fixes (13) étant chacune reliées à l'unité CCM-central d'abonné (41) par un circuit de jonction (15) et l'information étant transmise en multiplexage temporel sur les lignes de transmission, **caractérisée en ce qu'**
- on prévoit au moins une unité de commande (52, 35) dans respectivement l'unité CCM-central d'abonné (41) et dans chaque station fixe (13), les fonctions de cette unité (52, 35) n'étant pas régies par la norme DECT, et **en ce que**
- les unités de commande (52, 35) sont pourvues de moyens, lesquels sont arrangés pour la transmission entre les unités de commande (52, 35) par les circuits de jonction (15), de manière à ce qu'en multiplexage temporel, les intervalles de garde (G) prévus par la norme DECT soient utilisés pour la formation d'au moins une voie supplémentaire (VS).

2. Installation radiotéléphonique selon la revendication 1, **caractérisée en ce qu'il** n'y a qu'une seule voie supplémentaire (VS) sur chaque circuit de jonction (15.1 - 15.n), laquelle utilise en commun tous les intervalles de garde (G) de la structure de cadre DECT.

3. Installation radiotéléphonique selon la revendication 1, **caractérisée en ce qu'**il y a deux ou plusieurs voies supplémentaires (VS) sur chaque circuit de jonction (15.1 - 15.m), lesquelles utilisent les intervalles de garde (G) de la structure de cadre DECT répartis de manière donnée.

4. Installation radiotéléphonique selon la revendication 1, **caractérisée en ce qu'**on prévoit un concentrateur (61), lequel est inséré entre l'unité CCM-central d'abonné (41) et au moins deux stations fixes (13.1 - 13.m) et **en ce qu'**il y a au moins un nombre de voies supplémentaires (VS) concordant avec le nombre de stations fixes (13.1 - 13.m) raccordées sur le circuit de jonction (16) reliant le concentrateur (61) à l'unité CCM-central d'abonné (41).
